# EUROPEAN PATENT SPECIFICATION

(11) **EP 1 705 618 B1**
(45) Date of publication and mention of the grant of the patent: **20.12.2006**
(21) Application number: 05251737.2
(22) Date of filing: 22.03.2005
(51) Int. Cl.: G07D 7/00, G07C 1/00, G06K 19/10

(54) **Method and system for verifying authenticity of an object**
Verfahren und System zur Überprüfung der Authentizität eines Objektes
Méthode et système pour vérifier l'authenticité d'un objet

(43) Date of publication of application: 27.09.2006
(73) Proprietor: Userstar Information System Co., Ltd., Chiayi City, Taiwan (TW)
(72) Inventor: Teng, Ying-Hung, Chiayi City (TW)
(74) Representative: Jones, Ithel Rhys

(56) References cited:
- EP-A- 1 039 420
- WO-A-00/23954
- GB-A- 2 100 190
- US-A- 5 432 506

## Description

The invention relates to a method and system for verifying authenticity of an object, more particularly to a method and system for verifying authenticity of an object through the use of varying authentication codes.

Laser labels are currently in use to address the problem of counterfeiting. Typically, the laser label is attached to a product, and can be scanned to verify the authenticity of the product.

Such method of verification, however, requires the use of a dedicated verification device. Accordingly, verification of the authenticity of a product attached with the laser label is only possible by persons, such as retail outlet staff, equipped with the verification device, and cannot be conveniently carried out by consumers themselves.

Therefore, the object of the present invention is to provide a method and system for verifying authenticity of an object through the use of varying authentication codes so as to overcome the aforesaid drawback of the prior art.

WO 00/23954 describes a method comprising generating a verification code that is based on a set of public data (identification number) applied to goods and private data held by a verifier, and that can be matched to a security code of the goods so as to verify the authenticity of the goods.

According to one aspect of the present invention, a method for verifying authenticity of an object that has a unique identification number, the method including the steps of:
(A) enabling an authentication code generating device that is attached to the object to generate a varying secret key, a first authentication code based on the varying secret key, and a second authentication code based on the unique identification number of the object and the varying secret key; and
(B) enabling an inquiry-based user interface in the form of web-based application software to generate a verifying code that is based on two of the first and second authentication codes and the unique identification number of the object and that can be matched to the remaining one of the first and second authentication codes and the unique identification number of the object in order to verify authenticity of the object.

According to another aspect of the present invention, a system, which is for verifying authenticity of an object that has a unique identification number, comprises an authentication code generating device that is adapted to be attached to the object. The authentication code generating device includes a chip that is operable so as to generate a varying secret key, a first authentication code based on the varying secret key, and a second authentication code based on the varying secret key and the unique identification number of the object. A verifying code is generated based on two of the first and second authentication codes and the unique identification number of the object, and can be matched to the remaining one of the first and second authentication codes and the unique identification number of the object in order to verify authenticity of the object.

Other features and advantages of the present invention will become apparent in the following detailed description of the preferred embodiment with reference to the accompanying drawings, of which:
Figure 1 is a schematic block diagram of a system for implementing the preferred embodiment of the method for verifying authenticity of an object according to the present invention;
Figure 2 is a flowchart to illustrate steps performed by an authentication code generating device of the system of Figure 1; and
Figure 3 is a flowchart to illustrate steps associated with an inquiry-based user interface of the system of Figure 1.

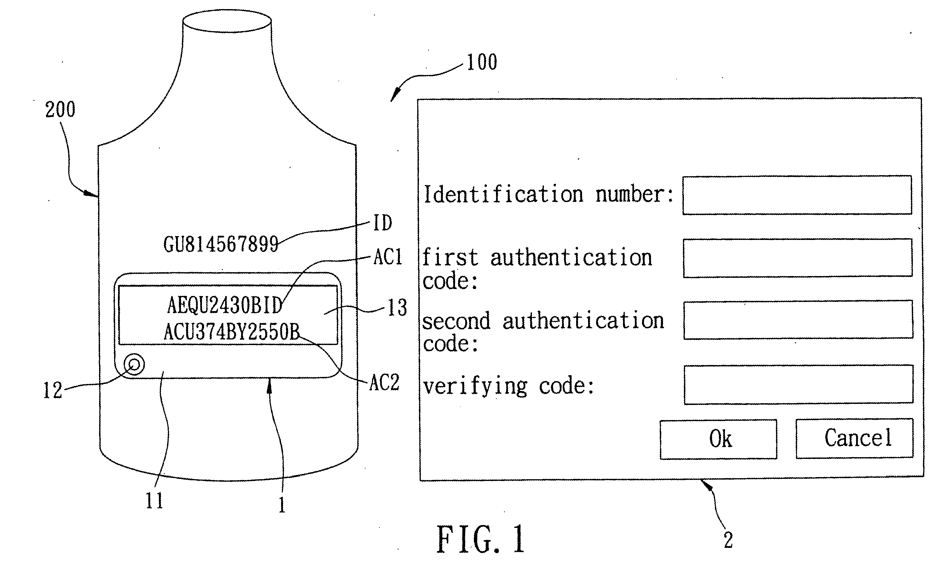

Figure 1 illustrates a system 100 for implementing the preferred embodiment of a method for verifying authenticity of an object 200 in accordance with this invention.

The object 200 has a unique identification number (ID), e.g., "GU814567899". In this embodiment, the object 200 is a consumer product, such as a wine. In an alternative embodiment, the object 200 may be an artwork, a security bond, or a certificate.

The system 100 according to this invention is shown to include an authentication code generating device 1 and an inquiry-based user interface 2.

The authentication code generating device 1 of the system 100 according to this invention includes a chip 11, an actuator 12, and a display 13.

The chip 11 of the authentication code generating device 1 is operable so as to generate a varying secret key, a first authentication code (AC1) based on the varying secret key, and a second authentication code (AC2) based on the unique identification number (ID) of the object 200 and the varying secret key, in a manner that will be described in greater detail hereinafter.

In this embodiment, the chip 11 of the authentication code generating device 1 is a radio frequency identification (RFID) chip.

In this embodiment, the chip 11 of the authentication code generating device 1 is configured with a chip code, e.g., "003027033001029" that corresponds to the unique identification number (ID) of the object 200.

The chip 11 of the authentication code generating device 1 is further configured with first to seventh lookup tables as follows:

**First Lookup Table**

| Group 1 | 1 | 2 | 3 | 4 | 5 | 6 | 7 | 8 | 9 | 10 |
|---|---|---|---|---|---|---|---|---|---|---|
| Identifier Code 1 | A | B | C | D | E | F | G | H | I | J |
| Identifier Code 2 | K | L | M | N | O | P | Q | R | S | T |
| Identifier Code 3 | U | V | W | X | Y | Z | 0 | 1 | 2 | 3 |

**Second Lookup Table**

| Group 2 | 000 | 001 | 002 | 003 | 004 | 005 | ... | 027 | 028 | 029 | 030 | 031 | 032 | 033 |
|---|---|---|---|---|---|---|---|---|---|---|---|---|---|---|
| Identifier Code | AA | AB | AC | AD | AE | AF | ... | A1 | A2 | A3 | A4 | A5 | A6 | BA |

**Third Lookup Table**

| Group 3 | 01 | 02 | 03 | 04 | 05 | 06 | 07 | 08 | 09 | 10 | 11 | 12 |
|---|---|---|---|---|---|---|---|---|---|---|---|---|
| Identifier Code 1 | A | B | C | D | E | F | G | H | I | J | K | L |
| Identifier Code 2 | M | N | O | P | Q | R | S | T | U | V | W | X |
| Identifier Code 3 | Y | Z | 1 | 2 | 3 | 4 | 5 | 6 | 7 | 8 | 9 | 0 |

**Fourth Lookup Table**

| Group4 | 01 | 02 | 03 | 04 | 05 | 06 | 07 | 08 | 09 | 10 | |
|---|---|---|---|---|---|---|---|---|---|---|---|
| Identifier Code | 1 | 2 | 3 | 4 | 5 | 6 | 7 | 8 | 9 | 10 | |
| Group 4 | 11 | 12 | 13 | 14 | 15 | 16 | 17 | 18 | 19 | 20 | |
| Identifier Code | A | B | C | D | E | F | G | H | I | J | |
| Group 4 | 21 | 22 | 23 | 24 | 25 | 26 | 27 | 28 | 29 | 30 | 31 |
| Identifier Code | K | L | M | N | O | P | Q | R | S | T | U |

**Fifth Lookup Table**

| Group 5 | 1 | 2 | 3 | 4 | 5 | 6 | 7 | 8 | 9 | 10 | 11 | 12 |
|---|---|---|---|---|---|---|---|---|---|---|---|---|
| Identifier Code | A | B | C | D | E | F | G | H | I | J | K | L |
| Group 5 | 13 | 14 | 15 | 16 | 17 | 18 | 19 | 20 | 21 | 22 | 23 | 24 |
| Identifier Code | M | N | O | P | Q | R | S | T | U | V | W | X |

**Sixth Lookup Table**

| Identifier code | Algorithm | Permutation |
|---|---|---|
| A | 132456 | BQAEUI3024 |
| B | 5123476 | IBAEQU2430 |
| C | 5671234 | I3024BAEQU |
| D | 2347615 | AEQU2430BI |

**Seventh Lookup Table**

| Identifier Code | Algorithm | Permutation |
|---|---|---|
| A | 1234 | ADA1BAABA3093024 |
| B | 1324 | ADA1A309BAAB3024 |
| C | 1243 | ADA1BAAB3024A309 |
| D | 1423 | ADA13024BAABA309 |

The display 13 of the authentication code generating device 1 is coupled to and controlled by the chip 11, and operable so as to display the first and second authentication codes (AC1, AC2) generated by the chip 11.

The actuator 12 of the authentication code generating device 1 is coupled to the chip 11, and is operable so as to enable the chip 11 to generate the varying secret key, and the first and second authentication codes (AC1, AC2). Preferably, the actuator 12 of the authentication code generating device 1 is one of a voice-activated device, a wireless device, a touch screen, a keypad, and timer software application.

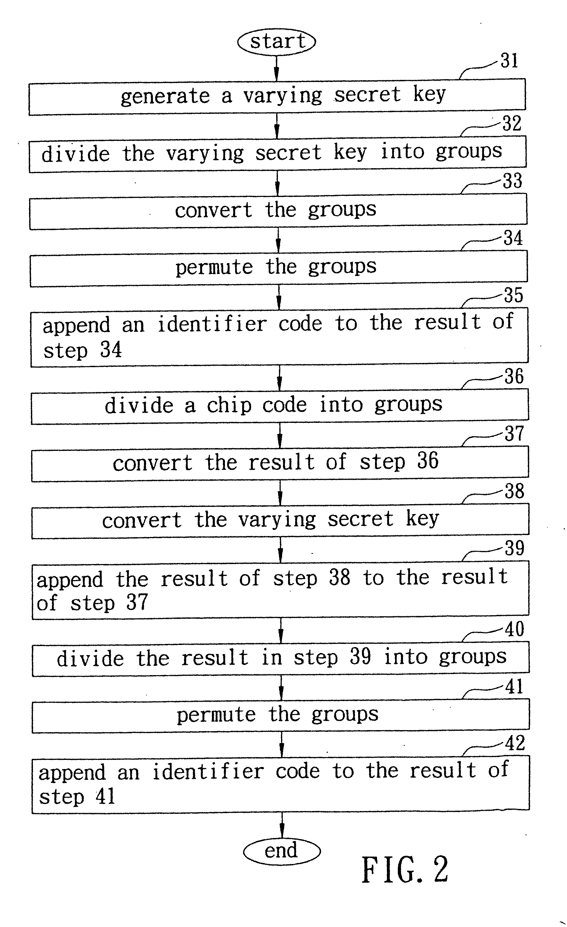

In this embodiment, the chip 11 of the authentication code generating device 1 of the system 100 is installed with proprietary software for executing steps associated with the method of the preferred embodiment. The steps performed by the chip 11 of the authentication code generating device 1, as illustrated in Figure 2, are as follows:

In step 31, upon operation of the actuator 12 of the authentication code generating device 1, the chip 11 of the authentication code generating device 1 generates a varying secret key that, in this embodiment, is a function of date and time. For example, when the actuator 12 of the authentication code generating device 1 is operated on May 31, 2004 at 9:30:24 AM, the chip 11 of the authentication code generating device 1 generates a varying secret key as "20040531093024".

In step 32, the chip 11 of the authentication code generating device 1 divides the varying secret key generated in step 31 into seven groups. For example, for the exemplified varying secret key of ""20040531093024", the first group corresponds to "2", the second group corresponds to "004", the third group corresponds to the "05", the fourth group corresponds to "31", the fifth group corresponds to "09", the sixth group corresponds to "30", and the seventh group corresponds to "24".

In step 33, the chip 11 of the authentication code generating device 1 converts each of the first to fifth groups into a corresponding identifier code using a respective one of the first to fifth lookup tables configured therein, leaving the sixth and seventh groups unchanged. It is noted that since the first group (e. g. , 2) has three corresponding identifier codes (e.g., B, L, and V), as illustrated in the first lookup table, and since the third group of the varying secret key (e.g. 05) has three corresponding identifier codes (e.g. E, Q, and 3), as illustrated in third lookup table, there are nine possible conversions for the varying secret key, "20040530093024", one of which is "BAEQUI3024".

Thereafter, in step 34, the chip 11 of the authentication code generating device 1 permutes the seven groups by selecting one of predetermined permutations stored in the sixth lookup table. With reference to the sixth lookup table, there are forty-five thousand three hundred sixty possible permutations for "BAEQUI3024", one of which is "AEQU2430BI".

In step 35, the chip 11 of the authentication code generating device 1 appends the identifier code, which corresponds to the selected one of the predetermined permutations, to the selected one of the predetermined permutations in order to obtain the first authentication code. With reference to the sixth lookup table, since the identifier code for "AEQU2430BI" is "D", the first authentication code (AC1) is "AEQU2430BID". In an alternative embodiment, steps 32 to 35 are skipped, and the first authentication code (AC1) takes the value of the varying secret key generated in step 31.

In step 36, the chip 11 of the authentication code generating device 1 divides the chip code configured therein into five groups. For example, for the exemplified chip code "003027033001029", the first group corresponds to "003", the second group corresponds to"027", the third group corresponds to "033", the fourth group corresponds to "001", and the fifth group corresponds to "029".

In step 37, the chip 11 of the authentication code generating device 1 converts each of the first to fifth groups into a corresponding identifier code using the second lookup table configured therein to thereby obtain "ADA1BAABA3".

In step 38, the chip 11 of the authentication code generating device 1 converts the varying secret key by discarding the first eight digits of the varying secret key to thereby obtain "093024".

In step 39, the chip 11 of the authentication code generating device 1 appends "093024" obtained in step 38 to "ADA1BAABA3" obtained in step 37 to thereby obtain "ADA1BAABA3093024".

In step 40, the chip 11 of the authentication code generating device 1 divides the results obtained in step 39 into four groups. The first group corresponds to "ADA1", the second group corresponds to "BAAB", the third group corresponds to "A309", and the fourth group corresponds to "3024".

In step 41, the chip 11 of the authentication code generating device 1 permutes the four groups by selecting one of predetermined permutations stored in the seventh lookup table. With reference to the seventh lookup table, there are twenty-four possible permutations for "ADA1BAABA3093024", one of which is "ADA1A309BAAB3024".

In step 42, the chip 11 of the authentication code generating device 1 appends the identifier code, which corresponds to the selected one of the predetermined permutations, to the selected one of the predetermined permutations in order to obtain the second authentication code. With reference to the seventh lookup table, since the identifier code for "ADA1A309BAAB3024" is "B", the second authentication code is "ADA1A309BAAB3034B".

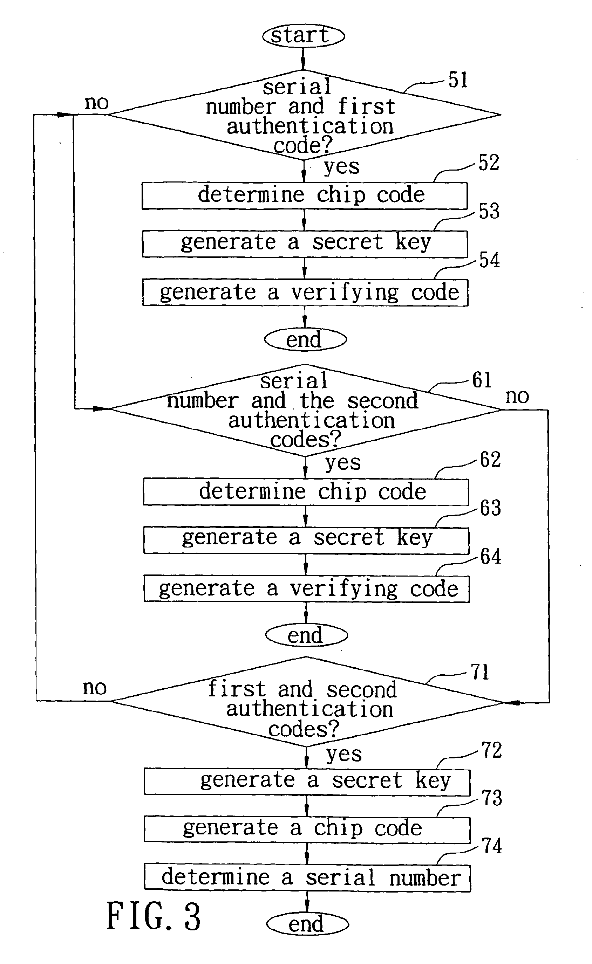

In this embodiment, the inquiry-based user interface 2 is web-based application software that is installed in a web server (not shown) and that executes steps associated with the method of the preferred embodiment. It is noted that the unique identification number (ID) of the object 200, and the chip code that corresponds to the unique identification number (ID) of the object 200 are configured in the inquiry-based user interface 2. The steps associated with the inquiry-based user interface 2, as illustrated in Figure 3, are as follows:

In step 51, after the unique identification number (ID) of the object 200, e.g., "GU814567899", and the first authentication code (AC1), e.g., "AEQU2430BID", generated by the chip 11 of the authentication code generating device 1 are inputted to the inquiry-based user interface 2, the flow proceeds to step 52. Otherwise, the flow proceeds to step 61.

In step 52, the inquiry-based user interface 2 determines the chip code that is configured therein and that corresponds to the unique identification number (ID) of the object 200 inputted in step 51.

In step 53, the inquiry-based user interface 2 generates a secret key based on the first authentication code (AC1) inputted in step 51 by performing steps 31 to 35 in reverse.

In step 54, the inquiry-based user interface 2 generates and displays a verifying code based on the chip code determined in step 52 and the secret key generated in step 53.

When the verifying code generated in step 54 matches the second authenticating code (AC2) generated by the chip 11 of the authentication code generating device 1, the object 200 is verified as authentic. Otherwise, the object 200 is determined to be a counterfeit.

In step 61, after the unique identification number (ID) of the object 200, and the second authentication code (AC2) generated by the chip 11 of the authentication code generating device 1 are inputted to the inquiry-based user interface 2, the flow proceeds to step 62. Otherwise, the flow proceeds to step 71.

In step 62, the inquiry-based user interface 2 determines the chip code that is configured therein and that corresponds to the unique identification number (ID) of the object 200 inputted in step 61.

In step 63, the inquiry-based user interface 2 generates a secret key based on the second authentication code (AC2) inputted in step 61 and the chip code determined in step 62 by performing steps 36 to 42 in reverse.

In step 64, the inquiry-based user interface 2 generates a verifying code based on the secret key generated in step 63.

When the verifying code generated in step 64 matches the first authenticating code (AC1) generated by the chip 11 of the authentication code generating device 1, the object 200 is verified as authentic. Otherwise, the object 200 is determined to be a counterfeit.

In step 71, after the first and second authentication codes (AC1, AC2) generated by the chip 11 of the authentication code generating device 1 are inputted to the inquiry-based user interface 2, the flow proceeds to step 72. Otherwise, the flow proceeds to step 51.

In step 72, the inquiry-based user interface 2 generates a secret key based on the first authentication code (AC1) inputted in step 71 by performing step 31 to 35 in reverse.

In step 73, the inquiry-based user interface 2 generates a chip code based on the secret key generated in step 72 and the second authentication code (AC2) inputted in step 71 by performing steps 36 to 42 in reverse.

In step 74, the inquiry-based user interface 2 determines the unique identification number (ID) that corresponds to the chip code generated in step 73.

When the unique identification number (ID) determined in step 74 matches the unique identification number (ID) of the object 200 generated by the chip 11 of the authentication code generating device 1, the object 200 is verified as authentic. Otherwise, the object 200 is determined to be a counterfeit.

It is noted that, in an alternative embodiment, the unique identification number (ID) of the object 200 serves as a serial number of the object 200.

From the above description, since the varying secret key generated by the chip 11 of the authentication code generating device 1 is a function of date and time, the first and second authentication codes (AC1, AC2) generated by the chip 11 of the authentication code generating device 1 varies with date and time each time the actuator 12 is operated. As such, a dedicated verification device is not required, and any person can verify the authenticity of the object 200 by simply accessing the internet.

It is noted that the authentication code generating device 1 of this invention is attached securely on the object 200, and unauthorized removal of the authentication code generating device 1 from the object 200 can render the authentication code generating device 1 inoperative. As such, the authentication code generating device 1 is prevented from being used on other objects.

In an alternative embodiment, the display 13 of the authentication code generating device 1 may be dispensed with. Moreover, the authentication code generating device 1 can include a transmitter (not shown) that is coupled to and controlled by the chip 11 of the authentication code generating device 1 so as to transmit the first and second authentication codes (AC1, AC2) wirelessly. The first and second authentication codes (AC1, AC2) transmitted by the transmitter of the authentication code generating device 1 may be received and displayed by one of a notebook computer, a personal digital assistant (PDA), and a mobile phone.

## Claims

1. A method for verifying authenticity of an object (200) that has a unique identification number (ID), saidmethod **characterized by** the steps of:
(A) enabling an authentication code generating device (1) that is attached to the object (200) to generate a varying secret key, a first authentication code (AC1) based on the varying secret key, and a second authentication code (AC2) based on the unique identification number (ID) of the object (200) and the varying secret key; and
(B) enabling an inquiry-based user interface in the form of web-based application software (2) to generate a verifying code that is based on two of the first and second authentication codes (AC1, AC2) and the unique identification number (ID) of the object (200), and that can be matched to the remaining one of the first and second authentication codes (AC1, AC2) and the unique identification number (ID) of the object (200) in order to verify authenticity of the object (200).

2. The method as claimed in Claim 1, wherein step (A) includes the sub-step of enabling a display (13) to inform the first and second authentication codes (AC1, AC2) to a user.

3. The method as claimed in Claim 1, wherein the authentication code generating device (1) is configured with a chip code that corresponds to the unique identification number (ID) of the object (200),
the second authentication code (AC2) being generated based on the chip code configured in the authentication code generating device (1) and the varying secret key generated in step (A).

4. The method as claimed in Claim 1, the unique identification number (ID) of the object (200) serving as a serial number of the object (200),
wherein the authentication code generating device (1) is configured with a chip code that corresponds to the serial number of the object (200),
the second authentication code (AC2) being generated based on the chip code configured in the authentication code generating device (1) and the varying secret key generated in step (A).

5. A system (100) for verifying authenticity of an object (200) that has a unique identification number (ID), said system (100) **characterised by**:
an authentication code generating device (1) adapted to be attached to the object (200), and including a chip (11) operable so as to generate a varying secret key, a first authentication code (AC1) based on the varying secret key, and a second authentication code (AC2) based on the varying secret key and the unique identification number (ID) of the object (200), and
an inquiry-based user interface in the form of web-based application software (2) configured to generate a verifying code based on two of the first and second authentication codes (AC1, AC2) and the unique identification number (ID) of the object (200) that can be matched to the remaining one of the first and second authentication codes (AC1, AC2) and the unique identification number (ID) of the object (200) in order to verify authenticity of the object (200).

6. The system (100) as claimed in Claim 5, wherein said chip (11) of said authentication code generating device (1) is configured with a chip code that corresponds to the unique identification number (ID) of the object (200), and generates the second authentication code (AC2) based on the chip code configured in said chip (11) of said authentication code generating device (1) and the varying secret key generated by said chip (11) of said authentication code generating device (1).

7. The system (100) as claimed in Claim 5, wherein said authentication code generating device (1) further includes an actuator (12) coupled to said chip (11) of said authentication code generating device (1), and operable so as to enable said chip (11) of said authentication code generating device (1) to generate the varying secret key and the first and second authentication codes (AC1, AC2).

8. The system (100) as claimed in Claim 5, wherein said authentication code generating device (1) further includes a display (13) coupled to and controlled by said chip (11) of said authentication code generating device (1) so as to display the first and second authentication codes (AC1, AC2) generated by said chip (11) of said authentication code generating device (1).

9. The system (100) as claimed in Claim 5, wherein said authentication code generating device (1) further includes a transmitter that is coupled to and controlled by said chip (11) of said authentication code generating device (1) to transmit the first and second authentication codes (AC2) wirelessly.

10. The system (100) as claimed in Claim 7, wherein said actuator (12) of said authentication code generating device (1) is one of a voice-activated device, a wireless device, a touch screen, a keypad, and timer application software.

11. The system (100) as claimed in Claim 5, wherein said chip (11) of said authentication code generating device (1) is a radio frequency identification (RFID) chip.

12. The system (100) as claimed in Claim 5, the unique identification number (ID) of the object (200) serving as a serial number of the object (200),
wherein said chip (11) of said authentication code generating device (1) is configured with a chip code that corresponds to the serial number of the object (200), and generates the second authentication code (AC2) based on the chip code configured in said chip (11) of said authentication code generating device (1) and the varying secret key generated by said chip (11) of said authentication code generating device (1).

## Patentansprüche

1. Verfahren zur Überprüfung der Authentizität eines Objektes (200), das eine einmalige Identifikationsnummer (ID) aufweist, **gekennzeichnet durch** die folgenden Schritte:
A) Einer einen Authentizitätscode erzeugenden Einrichtung, die an dem Objekt (200) angebracht ist, wird ermöglicht, einen veränderlichen Geheimschlüssel, einen ersten Authentizitätscode (AC1), der auf dem sich ändernden Geheimschlüssel beruht, und einen zweiten Authentizitätscode (AC2), der auf der einmaligen Identifikationsnummer (ID) des Objektes (200) und dem sich ändernden Geheimschlüssel beruht, zu erzeugen und
B) einem anfragegestützten Interface in Form einer webbasierten Anwendungssoftware (200) wird ermöglicht, einen Überprüfungscode, der auf beiden Authentizitätscodes (AC1, AC2) beruht sowie der einmaligen 1-dentifikationsnummer (ID) des Objektes (200) zu erzeugen und der zu dem verbleibenden einen Code des ersten und zweiten Authentizitätscodes (AC1, AC2) und der einmaligen Identifikationsnummer (ID) des Objektes (200) paßt, um die Authentizität des Objektes (200) zu überprüfen.

2. Verfahren nach Anspruch 1, **dadurch gekennzeichnet, daß** der Schritt (A) den Unterschritt aufweist, mit dem einem Display (3) ermöglicht wird, einem Benutzer den ersten und zweiten Authentizitätscode (AC1, AC2) mitzuteilen.

3. Verfahren nach Anspruch 1, **dadurch gekennzeichnet, daß** die den Authentizitätscode erzeugende Einrichtung (1) mit einem Chipcode ausgestattet ist, der der einmaligen Identifikationsnummer (ID) des Objektes (200) entspricht, wobei der zweite Authentizitätscode (AC2) auf der Grundlage des Chipcodes erzeugt wird, der in der den Authentizitätscode erzeugenden Einrichtung (1) und dem im Schritt (A) erzeugten, sich ändernden Geheimschlüssel gebildet wird.

4. Verfahren nach Anspruch 1, wobei die einmalige Identifikationsnummer (ID) des Objektes (200) als Seriennummer des Objektes (200) dient, **dadurch gekennzeichnet, daß** die den Authentizitätscode erzeugende Einrichtung (1) mit einem Chipcode versehen ist, der der Seriennummer des Objektes (200) entspricht, wobei der zweite Authentizitätscode (AC2) auf der Basis des Chipcodes gebildet wird, der in der den Authentizitätscode bildenden Einrichtung (1) gestaltet wird, sowie auf der Basis des variierenden Geheimschlüssels, der im Schritt (A) geschaffen wird.

5. System (100) zur Überprüfung der Authentizität eines Objektes (200), das eine einmalige Identifikationsnummer (ID) aufweist, **gekennzeichnet durch** eine einen Authentizitätscode schaffende Einrichtung (1), die an dem Objekt (200) anbringbar ist und einen Chip (11) aufweist, der so betätigbar ist, daß er einen sich ändernden Geheimschlüssel schafft, und **durch** einen zweiten Authentizitätscode (AC2), der auf dem sich ändernden Geheimschlüssel beruht sowie der einmaligen Identifikationsnummer (ID) des Objektes (200), ferner ein anfragegestütztes Benutzerinterface in der Form einer webgestützten Anwendersoftware (200), die so ausgebildet ist, daß sie einen sich ändernden Code auf der Grundlage des ersten und des zweiten Authentizitätscodes (AC1, AC2) und der einmaligen Identifikationsnummer (ID) des Objektes (200) erzeugt, der zu dem verbleibenden ersten und zweiten Authentizitätscode (AC1, AC2) und der einmaligen Identifikationsnummer (ID) des Objektes (200) paßt, um die Authentizität des Objektes (200) zu überprüfen.

6. System (100) nach Anspruch 5, **dadurch gekennzeichnet, daß** der Chip (11) der den Authentizitätscode erzeugenden Einrichtung (1) mit einem Chipcode versehen ist, der der einmaligen Identifikationsnummer (ID) des Objektes (200) entspricht und den zweiten Authentizitätscode (AC2) auf der Grundlage des in dem Chipcode (11) der den Authentizitätscode erzeugenden Einrichtung (1) und den variierenden Geheimschlüssel gestaltet, welcher von dem Chip (11) der den Authentizitätscode schaffenden Einrichtung (1) erzeugt wird.

7. System (100) nach Anspruch 5, **dadurch gekennzeichnet, daß** die den Authentizitätscode erzeugenden Einrichtung (1) ferner einen Antrieb (12) aufweist, der mit dem Chip (11) der den Authentizitätscode erzeugenden Einrichtung (1) verbunden ist und so arbeitet, daß der Chip (11) der den Authentizitätscode erzeugenden Einrichtung (1) den variierenden Geheimschlüssel sowie den ersten und den zweiten Authentizitätscode (AC1, AC2) erzeugen kann.

8. System (100) nach Anspruch 5, **dadurch gekennzeichnet, daß** die den Authentizitätscode erzeugende Einrichtung (1) ferner ein Display (13) aufweist, das mit dem Chip (11) der den Authentizitätscode erzeugenden Einrichtung (1) gekoppelt ist und von diesem gesteuert wird, so daß der erste und der zweite Authentizitätscode (AC1, AC2), die von dem Chip (11) der den Authentizitätscode erzeugenden Einrichtung (1) angegeben werden.

9. System (100) nach Anspruch 5, **dadurch gekennzeichnet, daß** die den Authentizitätscode erzeugende Einrichtung (1) des weiteren einen Sender aufweist, der mit dem Chip (11) der den Authentizitätscode erzeugenden Einrichtung (1) verbunden ist und durch ihn gesteuert wird, um den ersten und zweiten Authentizitätscode (AC2) drahtlos zu übertragen.

10. System (100) nach Anspruch 7, **dadurch gekennzeichnet, daß** der Antrieb (12) der den Authentizitätscode erzeugenden Einrichtung (1) entweder eine stimmenaktivierte Vorrichtung, eine drahtlose Vorrichtung, ein Berührungsbildschirm, eine Tastatur oder eine Zeitgeberanwendungssoftware ist.

11. System (100) nach Anspruch 5, **dadurch gekennzeichnet, daß** der Chip (11) der der den Authentizitätscode erzeugenden Einrichtung (1) ein Hochfrequenzidentifikationschip (RFID) ist.

12. System (100) nach Anspruch 5, wobei die einmalige Identifikationsnummer (ID) des Objektes (200) als Seriennummer des Objektes (200) dient^, **dadurch gekennzeichnet, daß** der Chip (11) der den Authentizitätscode erzeugenden Einrichtung (1) mit einem Chipcode ausgestattet ist, der der Seriennummer des Objektes (200) entspricht und den zweiten Authentizitätscode (AC2) erzeugt, und zwar auf der Basis des in dem Chipcode (1) der den Authentizitätscode erzeugenden Einrichtung (1) gestalteten Chipcodes sowie des sich ändernden Geheimschlüssels, der durch den Chip (11) der von der den Authentizitätscode schaffenden Einrichtung (1) erzeugt wird.

## Revendications

1. - Procédé pour vérifier l'authenticité d'un objet (200) qui a un numéro d'identification unique (ID), ledit procédé étant **caractérisé par** les étapes consistant à :
(A) permettre à un dispositif (1) de génération de code d'authentification qui est attaché à l'objet (200) de générer une clé secrète changeante, un premier code d'authentification (AC1) sur la base de la clé secrète changeante, et un second code d'authentification (AC2) sur la base du numéro d'identification unique (ID) de l'objet (200) et de la clé secrète changeante ; et
(B) permettre à une interface utilisateur basée sur l'interrogation sous la forme d'un logiciel d'application (2) accessible par Internet de générer un code de vérification qui est basé sur deux des premier et second codes d'authentification (AC1, AC2) et sur le numéro d'identification unique (ID) de l'objet (200), et qui peut être mis en correspondance avec celui restant des premier et second codes d'authentification (AC1, AC2) et le numéro d'identification unique (ID) de l'objet (200) afin de vérifier l'authenticité de l'objet (200).

2. - Procédé selon la revendication 1, dans lequel l'étape (A) comprend la sous-étape consistant à permettre à un dispositif d'affichage (13) d'informer un utilisateur des premier et second codes d'authentification (AC1, AC2).

3. - Procédé selon la revendication 1, dans lequel le dispositif (1) de génération de code d'authentification est configuré avec un code de puce qui correspond au numéro d'identification unique (ID) de l'objet (200), le second code d'authentification (AC2) étant généré sur la base du code de puce configuré dans le dispositif (1) de génération de code d'authentification et de la clé secrète changeante générée dans l'étape (A).

4. - Procédé selon la revendication 1, le numéro d'identification unique (ID) de l'objet (200) servant de numéro de série de l'objet (200),
dans lequel le dispositif (1) de génération de code d'authentification est configuré avec un code de puce qui correspond au numéro de série de l'objet (200),
le second code d'authentification (AC2) étant généré sur la base du code de puce configuré dans le dispositif (1) de génération de code d'authentification et de la clé secrète changeante générée dans l'étape (A).

5. - Système (100) pour vérifier l'authenticité d'un objet (200) qui a un numéro d'identification unique (ID), ledit système (100) étant **caractérisé par** :
- un dispositif (1) de génération de code d'authentification adapté pour être attaché à l'objet (200), et comprenant une puce (11) actionnable de façon à générer une clé secrète changeante, un premier code d'authentification (AC1) sur la base de la clé secrète changeante, et un second code d'authentification (AC2) sur la base de la clé secrète changeante et du numéro d'identification unique (ID) de l'objet (200) ; et
- une interface utilisateur basée sur l'interrogation sous la forme d'un logiciel d'application (2) accessible par Internet, configuré pour générer un code de vérification sur la base de deux des premier et second codes d'authentification (AC1, AC2) et du numéro d'identification unique (ID) de l'objet (200), qui peut être mis en correspondance avec celui restant des premier et second codes d'authentification (AC1, AC2) et le numéro d'identification unique (ID) de l'objet (200) afin de vérifier l'authenticité de l'objet (200).

6. - Système (100) selon la revendication 5, dans lequel ladite puce (11) dudit dispositif (1) de génération de code d'authentification est configurée avec un code de puce qui correspond au numéro d'identification unique (ID) de l'objet (200), et génère le second code d'authentification (AC2) sur la base du code de puce configuré dans ladite puce (11) dudit dispositif (1) de génération de code d'authentification et de la clé secrète changeante générée par ladite puce (11) dudit dispositif (1) de génération de code d'authentification.

7. - Système (100) selon la revendication 5, dans lequel ledit dispositif (1) de génération de code d'authentification comprend en outre un actionneur (12) couplé à ladite puce (11) dudit dispositif (1) de génération de code d'authentification, et actionnable de façon à permettre à ladite puce (11) dudit dispositif (1) de génération de code d'authentification de générer la clé secrète changeante et les premier et second codes d'authentification (AC1, AC2).

8. - Système (100) selon la revendication 5, dans lequel ledit dispositif (1) de génération de code d'authentification comprend en outre un dispositif d'affichage (13) couplé à et commandé par ladite puce (11) dudit dispositif (1) de génération de code d'authentification de façon à afficher les premier et second codes d'authentification (AC1, AC2) générés par ladite puce (11) dudit dispositif (1) de génération de code d'authentification.

9. - Système (100) selon la revendication 5, dans lequel ledit dispositif (1) de génération de code d'authentification comprend en outre un émetteur qui est couplé à et commandé par ladite puce (11) dudit dispositif (1) de génération de code d'authentification pour transmettre de manière sans fil les premier et second codes d'authentification (AC2).

10. - Système (100) selon la revendication 7, dans lequel ledit actionneur (12) dudit dispositif (1) de génération de code d'authentification est l'un parmi un dispositif activé à la voix, un dispositif sans fil, un écran tactile, un clavier numérique et un logiciel d'application de temporisateur.

11. - Système (100) selon la revendication 5, dans lequel ladite puce (11) dudit dispositif (1) de génération de code d'authentification est une puce d'identification par radiofréquence (RFID - Radio Frequency Identification).

12. - Système (100) selon la revendication 5, le numéro d'identification unique (ID) de l'objet (200) servant de numéro de série de l'objet (200),
dans lequel ladite puce (11) dudit dispositif (1) de génération de code d'authentification est configurée avec un code de puce qui correspond au numéro de série de l'objet (200), et génère le second code d'authentification (AC2) sur la base du code de puce configuré dans ladite puce (11) dudit dispositif (1) de génération de code d'authentification et de la clé secrète changeante générée par ladite puce (11) dudit dispositif (1) de génération de code d'authentification.
